# EUROPÄISCHE PATENTSCHRIFT

(11) **EP 1 413 107 B1**
(45) Veröffentlichungstag und Bekanntmachung des Hinweises auf die Patenterteilung: **23.11.2005**
(21) Anmeldenummer: 02758384.8
(22) Anmeldetag: 24.07.2002
(51) Int. Cl.: H04L 25/03

(54) **VORRICHTUNG ZUM ENTZERREN EINES EMPFANGSSIGNALS**
DEVICE FOR CORRECTING A RECEIVING SIGNAL
DISPOSITIF POUR CORRIGER UN SIGNAL DE RECEPTION

(30) Priorität: 27.07.2001 DE 10136698
(43) Veröffentlichungstag der Anmeldung: 28.04.2004
(73) Patentinhaber: Infineon Technologies AG, 81669 München (DE)
(72) Erfinder: GAZSI, Lajos, 40239 Düsseldorf (DE); SCHÖBINGER, Matthias, 81825 München (DE)
(74) Vertreter: Charles, Glyndwr
(86) Internationale Anmeldenummer: PCT/EP2002/008250
(87) Internationale Veröffentlichungsnummer: WO 2003/013086

(56) Entgegenhaltungen:
- US-A- 4 433 425
- US-A- 5 692 011
- US-A- 5 949 819

## Beschreibung

Die vorliegende Erfindung bezieht sich auf eine Vorrichtung zum Entzerren eines Empfangssignals und insbesondere auf eine Vorrichtung zum Entzerren eines Empfangssignals eines Übertragungssystems.

Bei digitalen Übertragungsverfahren ist eine adaptive Entzerrung eine wirkungsvolle Maßnahme, um vor allem zeitabhängige Verzerrungen, wie z. B. durch Alterung, Temperaturschwankungen oder wechselnde Verbindungskonfigurationen, auf der Übertragungsstrecke auszugleichen. Angesichts der bei modernen CMOS-Technologien für eine digitale Signalverarbeitung verfügbaren Komplexitäten, wie z. B. der Zahl der verfügbaren logischen Gatter und der damit verbundenen Signalverarbeitungsmöglichkeiten, ist es aus Kostengründen außerdem attraktiv, die Anforderungen hinsichtlich der Toleranzen analoger Komponenten/Module zu reduzieren und die daraus resultierenden Systemimperfektionen, die durch Prozeßschwankungen, aber auch durch zeitvariante äußere Einflüsse, wie z. B. Temperaturschwankungen, bedingt sind, mittels eines adaptiven Entzerrers zu kompensieren. Zeitvariante Phänomene, wie etwa die Änderung der Übertragungsfunktion analoger Komponenten aufgrund einer Temperaturdrift, spielen sich dabei auf einer Zeitskala ab, die einige Größenordnungen länger als die Symbolperiode ist. Es handelt sich daher um ein quasi-statisches Problem, d. h. die optimale Entzerrung, wie z. B. die optimale Koeffizienteneinstellung für ein Filter, eines Entzerrers ist praktisch zeitunabhängig. Lediglich die spektralen Eigenschaften des Sendespektrums sind unter Umständen zeitvariant.

Die Einstellung eines adaptiven Entzerrers kann mit Hilfe der Übertragung einer bekannten Datensequenz (Data-Aided), wie z. B. einer Präambel, durchgeführt werden. Ein solcher Entzerrer, der eine Einrichtung zum einstellbaren Entzerren des Empfangssignals, eine Einrichtung zum Einstellen dieser Entzerrung sowie eine Einrichtung zum Überwachen und Analysieren des Empfangssignals, ob eine Trainingssequenz vorliegt, und zum Aktivieren der Einrichtung zum Einstellen der Entzerrung ist aus dem Dokument US 4 433 425 A bekannt. Bei vielen Übertragungsverfahren, vor allem bei kontinuierlicher Übertragung im Gegensatz zu einem Stoß-Betrieb bzw. Burst-Betrieb oder beispielsweise blockbasierten Verfahren, wie eine Mehrträgerübertragung, ist jedoch die Übertragung einer solchen bekannten Datensequenz nicht vorgesehen. Ein adaptiver Entzerrer kann daher alternativ so aufgebaut sein, dass die Information für die Einstellung des adaptiven Entzerrers allein aus den empfangenen und möglicherweise verfälschten Daten abgeleitet wird. Dies setzt voraus, dass die gesendete Datensequenz besondere Eigenschaften aufweist.

Eine besondere Eigenschaft einer solchen Datensequenz besteht beispielsweise darin, dass das Eingangsspektrum den gesamten Frequenzbereich des Entzerrers abdecken muss. Diese Eigenschaft ist beispielsweise bei dezimierenden Entzerrern, die von ihrem Eingang zu ihrem Ausgang die Datenrate, z. B. durch Unterabtastung des Signals, reduzieren, nicht gewährleistet. Der Frequenzbereich des Entzerrers erstreckt sich in diesem Fall bis f_{sampling}/2, wobei f_{sampling} z. B. ein ganzzahliges Vielfaches von f_{symbol} ist. Die Signalenergie ist im wesentlichen auf einen Bereich < f_{symbol}/2 beschränkt. Aufgrund der fehlenden Signalenergie oberhalb von f_{symbol}/2 kann ein Problem auftreten, das unter dem Begriff "tap wandering" bzw. Koeffizientenwandern bekannt ist. f_{symbol} ist hierin die Symbolfrequenz von gesendeten Symbolen, die beispielsweise durch Spannungspegel in einem gesendeten Signal repräsentiert sind.

Eine weitere besondere Eigenschaft der oben erwähnten Datensequenz besteht beispielweise darin, dass die aufeinanderfolgenden Daten nicht korreliert sein dürfen, d. h. das Eingangsspektrum muß "weiß" sein und muss idealerweise einen flachen Frequenzverlauf mit einer Tiefpaßcharakteristik aufweisen. Diese Eigenschaft kann gewährleistet werden, wenn aus den Daten vor der Übertragung mittels eines Verwürflers bzw. eines Scramblers eine Pseudo-Zufallsfolge erzeugt wird.

Es gibt jedoch eine ganze Reihe von Anwendungen, bei denen keine Aussage über die Eigenschaften des Sendespektrums über die Zeit gemacht werden kann. Dies liegt daran, dass die verwendeten Codierschemata lediglich im Hinblick darauf gewählt werden, dass spezielle Eigenschaften des Systems, wie z. B. die Erleichterung einer Taktrückgewinnung oder das Fehlen eines Gleichanteils im Sendespektrum, sichergestellt werden. Es ist insbesondere üblicherweise kein Verwürfler vorgesehen.

Ein Beispiel für eine solche Anwendung ist die digitale Datenübertragung im Rahmen der PDH (= Plesiodhronen Digitalen Hierarchie) gemäß dem Tₓ-Standard bzw. DSₓ-Standard in den USA (x = 1: 1,544 MBit/s Datenübertragungsrate; x = 3: 44,736 MBit/s Datenübertragungsrate) oder dem Ex-Standard in Europa (x = 1: 2,048 MBit/s Datenübertragungsrate; x = 3: 34,368 MBit/s Datenübertragungsrate), für die derzeit Komponenten in großem Volumen (großen Stückzahlen) benötigt werden. Ein weiteres Beispiel für eine solche Anwendung ist die digitale Übertragung zwischen einer physikalischen Ebene (PHY; PHY = Physical Layer) einer 10 Gigabit/s Übertragung via Glasfaser und den zugehörigen Zwischenzugriffsebenen (MAC; MAC = Medium Access Layer) über das sogenannte "Ten Gigabit Attachment U-nit Interface (XAUI)", das im Rahmen des IEEE Standards P802.3ae spezifiziert wird. Ziel ist eine möglichst große physikalische Separierung dieser Ebenen zu ermöglichen. Diese Anwendung wird kurzfristig von enormer Bedeutung sein.

Weiterhin weicht bei vielen Systemen das Übertragungsspektrum mehr oder weniger deutlich von dem Ideal eines "flachen" Basisbandspektrums mit einem Tiefpaßcharakter ab. Bei Verwendung einer Leitungscodierung wie in der oben aufgeführten Tx/Ex-Übertragung, bei der das Sendespektrum keinen Gleichanteil aufweisen soll, ergibt sich etwa eine Durchlaßband-Charakteristik, bei der außerdem das Spektrum im Durchlaßbereich nicht flach ist.

Einzelne Effekte, wie die frequenzabhängige Dämpfung bei der Übertragung über Zwei-Draht-Kupferleitungen, die durch die Leitungslänge bestimmt ist, oder die Verzerrungen, die durch Toleranzen in der Eckfrequenz eines analogen Anti-Alias-Filters mit einer bekannten Übertragungsfunktion hervorgerufen werden, können mittels eines festen, aber einstellbaren Entzerrers in der Form eines programmierbaren Filters kompensiert werden.

Die Einstellung eines solchen Entzerrers auf einem Chip kann einerseits extern erfolgen, wie z. B. durch die Auswahl von Koeffizienten aus Koeffizientensätzen, die auf dem selben Chip gespeichert sind, oder durch eine externe Programmierung. Dabei kann beispielsweise eine Einstellung gewählt werden, bei der die geringste Bitfehlerrate erreicht wird. Es ist jedoch andererseits auch eine Einstellung durch eine Steuereinheit auf dem Chip möglich, die mittels eines geeigneten Kriteriums zwischen den Koeffizienten, die auf dem Chip gespeichert sind, auswählen kann.

Bei beiden Fällen können die gespeicherten Koeffizienten die zur Verzerrung inverse Übertragungsfunktion approximieren und etwa durch Minimierung einer geeigneten Kostenfunktion, wie z. B. eines Kriteriums eines kleinsten mittleren quadratischen Fehlers (LMS; LMS = Least Mean Square), bestimmt werden. Bei vielen Anwendungen sind einem solchen Vorgehen jedoch praktische Grenzen gesetzt, da nur eine begrenzte Anzahl von Koeffizientensätzen gespeichert werden kann. Ein solches Verfahren kann dann nützlich sein, wenn im wesentlichen eine dominante Verzerrung, die zudem durch wenige Parameter bestimmt ist, kompensiert werden soll. Zeitvariante Phänomene, wie z. B. Temperaturschwankungen, Alterung etc., können auf diesem Wege in der Regel nicht berücksichtigt werden.

Ein Problem im Stand der Technik besteht daher darin, dass mit den bekannten einstellbaren Entzerrern lediglich in einem begrenzten Umfang Verzerrungen von beispielsweise Übertragungsstrecke und analogen Komponenten ausgeglichen werden können.

Ein weiteres Problem im Stand der Technik besteht darin, dass mit den bekannten einstellbaren Entzerrern praktisch keine zeitvarianten Verzerrungen, die z. B. durch Temperaturschwankungen, Alterung etc. bedingt sind, ausgeglichen werden können.

Die Aufgabe der vorliegenden Erfindung besteht folglich darin, ein Übertragungssystem zu schaffen, das eine Vorrichtung zum Entzerren des Empfangssignales umfaßt, die eine flexible Entzerrung von zeitvarianten Verzerrungen, die insbesondere durch das Übertragungssysteme bedingt sind, ermöglicht. Dabei muß die Vorrichtung zum Entzerren eines Empfangssignales so ausgelegt sein, dass eine Entzerrung auch dann erreicht wird, wenn apriori keine Aussagen über die Zeit bezüglich des Spektrums des Empfangssignales gemacht werden können.

Diese Aufgabe wird durch eine Vorrichtung zum Entzerren eines Empfangssignals gemäß Anspruch 1, ein Übertragungssystem gemäß Anspruch 29 und ein Verfahren gemäß Anspruch 30 gelöst.

Die der vorliegenden Erfindung zugrundeliegende Idee besteht darin, dass automatische Adaptionsverfahren, die sich bei kontinuierlicher Übertragung von Daten mit weißem Spektrum bewährt haben, mit einer zeitlich begrenzten, also blockweisen Auswertung des Datenstroms, ähnlich wie bei Datenunterstützten Verfahren bzw. "Data-Aided"-Verfahren, bei denen die übertragenen Daten bekannt sind, kombiniert werden.

Im Gegensatz zu solchen Verfahren, die z. B. eine bekannte Rahmenstruktur und eine mitübertragene Präambel nutzen, werden bei dem vorgeschlagenen Verfahren die Blöcke des Empfangssignals automatisch bestimmt, die für die Adaption verwendet werden können. Ein solches Verfahren mit entsprechendem Mehraufwand für die Auswertung des Empfangssignals und die entsprechende Aktivierung der Adaption ist angesichts des technologischen Fortschritts (oder der wachsenden verfügbaren Komplexität auf einem Chip) attraktiv.

Ein Vorteil der vorliegenden Erfindung besteht darin, dass mit Hilfe der vorliegenden Erfindung die oben aufgeführten Vorteile einer adaptiven Entzerrung auch bei Übertragungsverfahren genutzt werden können, bei denen keine Aussagen über die Eigenschaften des Sendespektrums im Laufe der Zeit möglich sind. Die Erfindung ist auch bei solchen Fällen anwendbar, bei denen in zeitlich nicht vorhersehbarer Weise überhaupt kein Sendesignal vorhanden ist.

Ein weiterer Vorteil der vorliegenden Erfindung besteht darin, dass dieselbe auf eine einfache Art und Weise erweitert werden kann, um bei Fällen angewendet zu werden, bei denen das Konvergenzverhalten der adaptiven Entzerrung schlecht ist.

In den Unteransprüchen finden sich vorteilhafte Weiterbildungen und Verbesserungen der in Anspruch 1 angegebenen Vorrichtung.

Gemäß einer bevorzugten Weiterbildung der Vorrichtung weist dieselbe ferner eine erste Einrichtung zum Entscheiden und zum Liefern eines ersten Schätzsignals auf, die die gesendeten Symbole des Sendesignals schätzt und die geschätzten Symbole mit dem ersten Schätzsignal liefert.

Gemäß einer weiteren bevorzugten Weiterbildung der Vorrichtung weist dieselbe ferner eine erste Einrichtung zum Liefern eines ersten Fehlersignals auf, die das erste Fehlersignal aus der Differenz des ersten Schätzsignals, das von der ersten Einrichtung zum Entscheiden geliefert wird, und des ersten entzerrten Empfangssignals, das von der ersten Einrichtung zum Entzerren geliefert wird, bestimmt.

Gemäß einer weiteren bevorzugten Weiterbildung der Vorrichtung bestimmt die Einrichtung zum Einstellen der einstellbaren Entzerrung die erste einstellbare Entzerrung der ersten Einrichtung zum Entzerren des Empfangssignals aus dem Empfangssignal und dem ersten Fehlersignal.

Gemäß einer weiteren bevorzugten Weiterbildung der Vorrichtung leitet die Einrichtung zum Einstellen der einstellbaren Entzerrung die erste einstellbare Entzerrung der ersten Einrichtung zum Entzerren des Empfangssignals aus der Korrelation des Empfangssignals und des ersten Fehlersignals ab.

Gemäß einer weiteren bevorzugten Weiterbildung der Vorrichtung schaltet die Einrichtung zum Überwachen des Empfangssignals das erste Fehlersignal zu der Einrichtung zum Einstellen der einstellbaren Entzerrung durch und aktiviert die Einrichtung zum Einstellen der einstellbaren Entzerrung, wenn das dem Empfangssignal zugeordnete Sendesignal die bestimmten Eigenschaften aufweist.

Gemäß einer weiteren bevorzugten Weiterbildung der Vorrichtung weist dieselbe ferner eine zweite Einrichtung zum Entzerren des Empfangsignals und zum Liefern eines zweiten entzerrten Empfangssignals auf, wobei die zweite Einrichtung zum Entzerren des Empfangssignals eine zweite einstellbare Entzerrung aufweist.

Gemäß einer weiteren bevorzugten Weiterbildung der Vorrichtung weist dieselbe ferner eine zweite Einrichtung zum Entscheiden und zum Liefern eines zweiten Schätzsignals auf, die die gesendeten Symbole des Sendesignals schätzt und die geschätzten Symbole in dem zweiten Schätzsignal liefert.

Gemäß einer weiteren bevorzugten Weiterbildung der Vorrichtung weist dieselbe ferner eine zweite Einrichtung zum Liefern eines zweiten Fehlersignals auf, die das zweite Fehlersignal aus der Differenz des zweiten Schätzsignals, das von der zweiten Einrichtung zum Entscheiden geliefert wird, und des zweiten entzerrten Empfangssignals, das von der zweiten Einrichtung zum Entzerren des Empfangssignals geliefert wird, bestimmt.

Gemäß einer weiteren bevorzugten Weiterbildung der Vorrichtung bestimmt die Einrichtung zum Einstellen der einstellbaren Entzerrung die zweite einstellbare Entzerrung der zweiten Einrichtung zum Entzerren des Empfangssignals aus dem Empfangssignal und dem zweiten Fehlersignal.

Gemäß einer weiteren bevorzugten Weiterbildung der Vorrichtung leitet die Einrichtung zum Einstellen der einstellbaren Entzerrung die zweite einstellbare Entzerrung der zweiten Einrichtung zum Entzerren des Empfangssignals aus der Korrelation des Empfangssignals und des zweiten Fehlersignals ab.

Gemäß einer weiteren bevorzugten Weiterbildung der Vorrichtung schaltet die Einrichtung zum Überwachen des Empfangssignals das zweite Fehlersignal zu der Einrichtung zum Einstellen der einstellbaren Entzerrung durch und aktiviert die Einrichtung zum Einstellen der einstellbaren Entzerrung, wenn das dem Empfangssignal zugeordnete Sendesignal die bestimmten Eigenschaften aufweist.

Gemäß einer weiteren bevorzugten Weiterbildung der Vorrichtung weist dieselbe ferner eine Einrichtung zum Vergleichen auf, die ein erstes Gütemaß, das aus dem ersten Fehlersignal abgeleitet ist, und ein zweites Gütemaß, das aus dem zweiten Fehlersignal abgeleitet ist, vergleicht, und wenn das zweite Gütemaß größer als das erste Gütemaß ist, bewirkt, dass die eingestellte Entzerrung der zweiten Einrichtung zum Entzerren des Empfangssignals von der Einrichtung zum Einstellen der einstellbaren Entzerrung zu der ersten Einrichtung zum Entzerren des Empfangssignals geliefert wird.

Gemäß einer weiteren bevorzugten Weiterbildung der Vorrichtung sind vor der Einrichtung zum Vergleichen eine erste und eine zweite Einrichtung zum Ermitteln eines Gütemaßes angeordnet, die das erste und das zweite Gütemaß aus dem ersten Fehlersignal und dem zweiten Fehlersignal ableiten und an die Einrichtung zum Vergleichen liefern.

Gemäß einer weiteren bevorzugten Weiterbildung der Vorrichtung sind das erste und das zweite Gütemaß aus dem mittleren quadratischen Fehler des ersten Fehlersignals und des zweiten Fehlersignals abgeleitet.

Gemäß einer weiteren bevorzugten Weiterbildung der Vorrichtung überwacht die Einrichtung zum Überwachen des Empfangssignals wählbar entweder das erste entzerrte Empfangssignal, das von der ersten Einrichtung zum Entzerren des Empfangssignals geliefert wird, oder das erste Schätzsignal, das von der ersten Einrichtung zum Entscheiden geliefert wird.

Gemäß einer weiteren bevorzugten Weiterbildung der Vorrichtung überwacht die Einrichtung zum Überwachen des Empfangssignals wählbar entweder das zweite entzerrte Empfangssignal, das von der zweiten Einrichtung zum Entzerren des Empfangssignals geliefert wird, oder das zweite Schätzsignal, das von der zweiten Einrichtung zum Entscheiden geliefert wird.

Gemäß einer weiteren bevorzugten Weiterbildung der Vorrichtung weist dieselbe ferner ein erstes Formungsfilter, das der zweiten Einrichtung zum Entzerren des Empfangssignals und der Einrichtung zum Einstellen der einstellbaren Entzerrung ein geformtes Empfangssignal liefert, und ein zweites Formungsfilter auf, das eine zu dem ersten Formungsfilter entsprechende Filterfunktion aufweist und der Einrichtung zum Liefern eines zweiten Fehlersignals ein geformtes zweites Schätzsignal liefert.

Gemäß einer weiteren bevorzugten Weiterbildung der Vorrichtung weist dieselbe ferner ein erstes Formungsfilter, das der Einrichtung zum Einstellen der einstellbaren Entzerrung ein geformtes Empfangssignal liefert, und ein zweites Formungsfilter auf, das eine zu dem ersten Formungsfilter identische Filterfunktion aufweist und der Einrichtung zum Überwachen des Empfangssignals ein geformtes zweites Fehlersignal liefert.

Gemäß einer weiteren bevorzugten Weiterbildung der Vorrichtung weisen die erste und/oder die zweite Einrichtung zum Entzerren des Empfangsignals ein programmierbares Filter auf, dessen Entzerrung über Filterkoeffizienten durch die Einrichtung zum Einstellen der einstellbaren Entzerrung einstellbar ist.

Gemäß einer weiteren bevorzugten Weiterbildung der Vorrichtung weisen die erste und/oder die zweite Einrichtung zum Entzerren des Empfangssignals ferner jeweils einen ersten Speicher zum Speichern eines ersten Satzes von Filterkoeffizienten auf.

Gemäß einer weiteren bevorzugten Weiterbildung der Vorrichtung weist der erste Satz von Filterkoeffizienten Filterkoeffizienten auf, die bei der Initialisierung einer Übertragung von Sendesignalen verwendet werden.

Gemäß einer weiteren bevorzugten Weiterbildung der Vorrichtung weisen die erste und/oder die zweite Einrichtung zum Entzerren des Empfangssignals ferner einen zweiten Speicher zum Speichern eines zweiten Satzes von Filterkoeffizienten auf.

Gemäß einer weiteren bevorzugten Weiterbildung der Vorrichtung weist der zweite Satz von Filterkoeffizienten Filterkoeffizienten auf, die von der Einrichtung zum Einstellen der einstellbaren Entzerrung geliefert werden.

Gemäß einer weiteren bevorzugten Weiterbildung der Vorrichtung weist die Einrichtung zum Überwachen des Empfangssignals eine Filterbank auf, um die Energieverteilung in dem Empfangssignal zu bestimmen.

Gemäß einer weiteren bevorzugten Weiterbildung der Vorrichtung weist die Filterbank Bandpassfilter auf.

Gemäß einer weiteren bevorzugten Weiterbildung der Vorrichtung führt die Einrichtung zum Überwachen des Empfangssignals eine Fourier-Transformation durch, um die Energieverteilung in dem Empfangssignal zu bestimmen.

Gemäß einer weiteren bevorzugten Weiterbildung der Vorrichtung weist das Sendesignal als eine bestimmte Eigenschaft der bestimmten Eigenschaften des Sendesignals ein flaches Basisbandspektrum mit einer Tiefpasscharakteristik auf.

Gemäß einer weiteren bevorzugten Weiterbildung der Vorrichtung werden Abweichungen des Sendesignals von einem flachen Basisbandspektrum mit einer Tiefpasscharakteristik in Form eines entsprechenden Referenzspektrums in der Einrichtung zum Überwachen des Empfangssignals berücksichtigt.

Bevorzugte Ausführungsbeispiele der vorliegenden Erfindung sind nachfolgend unter Bezugnahme auf die beigefügten Zeichnungen näher erläutert.

Es zeigen:
Fig. 1 eine allgemeine Darstellung der vorliegenden Erfindung;
Fig. 2 ein erstes Ausführungsbeispiel gemäß der vorliegenden Erfindung;
Fig. 3 ein zweites Ausführungsbeispiel gemäß der vorliegenden Erfindung;
Fig. 4 ein drittes Ausführungsbeispiel gemäß der vorliegenden Erfindung; und
Fig. 5 ein viertes Ausführungsbeispiel gemäß der vorliegenden Erfindung.

In den Figuren bezeichnen gleiche Bezugszeichen bzw. Bezugszeichen, die sich lediglich in der ersten Ziffer unterscheiden, gleiche oder funktionsgleiche Bestandteile.

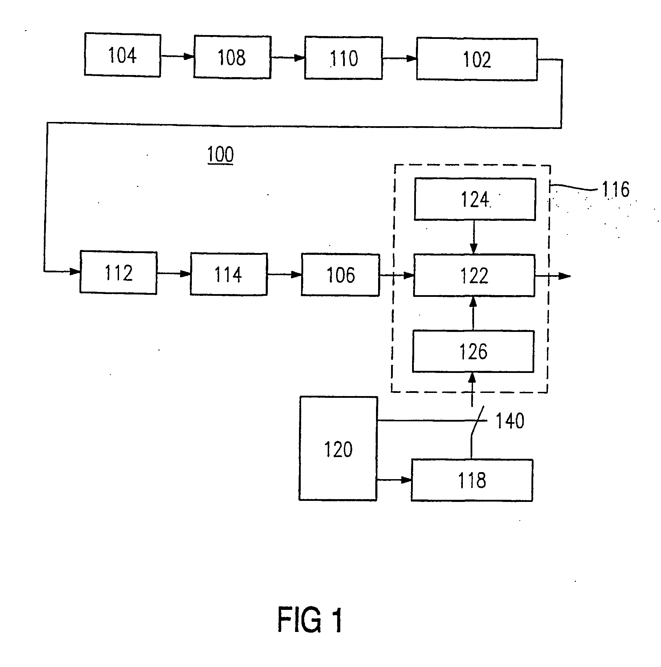

Fig. 1 zeigt eine allgemeine Darstellung der vorliegenden Erfindung. Ein Übertragungssystem 100, bei dem die vorliegende Erfindung verwendet wird, umfasst einen Übertragungskanal 102, der zwischen einem Sender 104 und einem Empfänger, der aus den Komponenten 112, 114 und 106 besteht, angeordnet ist. Der Sendepfad des Übertragungssystems 100 weist bei Verwendung eines digitalen Senders 104 folgend dem Sender einen Digital-Analog-Wandler 108, der das digitale Sendesignal des Senders 104 in ein analoges Sendesignal umwandelt, gefolgt von weiteren analogen Komponenten 110, über die das analoge Sendesignal in den Übertragungskanal 102 eingespeist wird, auf. Der Empfangspfad weist äquivalent dazu ferner analoge Empfangskomponenten 112, z. B. Anti-Alias-Filter, und einen Analog-Digital-Wandler 114 zum Umwandeln des analogen Empfangssignals in ein digitales Empfangssignal auf. Der Empfangspfad kann ferner weitere digitale Komponenten 106, wie Einrichtungen zur Abtastratenerhöhung bzw. Abtastratenreduzierung, umfassen.

Fig. 1 zeigt ferner allgemein eine erfindungsgemäße Vorrichtung zum Entzerren eines Empfangssignals, die das Empfangssignal des Senders nach der digitalen Komponente 106 entzerrt. Das Empfangssignal ist dem Sendesignal, das in dem verzerrenden Übertragungssystem 100 gesendet wird, zugeordnet. Das Sendesignal weist Zeitabschnitte auf, in denen dasselbe bestimmte Eigenschaften, wie z. B. ein weißes Frequenzspektrum, bei dem aufeinanderfolgende Daten nicht miteinander korreliert sind, und/oder einen flachen Frequenzverlauf mit Tiefpasscharakteristik, aufweist.

Die Vorrichtung zum Entzerren des Empfangssignals weist eine Einrichtung 116 zum Entzerren des Empfangssignals und zum Liefern eines entzerrten Empfangssignals auf, wobei die Einrichtung 116 zum Entzerren des Empfangssignals eine einstellbare Entzerrung besitzt. Die Vorrichtung zum Entzerren des Empfangssignals weist ferner eine Einrichtung 118 zum Einstellen (automatische Adaption) der einstellbaren Entzerrung der Einrichtung 116 zum Entzerren des Empfangssignals abhängig vom Empfangssignal und eine Einrichtung 120 zum Überwachen des Empfangssignals und zum Aktivieren der Einrichtung 118 zum Einstellen der einstellbaren Entzerrung auf, wenn das dem Empfangssignal zugeordnete Sendesignal bestimmte Eigenschaften, wie z. B. ein weißes Frequenzspektrum, aufweist, die zum Einstellen einer Entzerrung der durch das Übertragungssystem verursachten Verzerrung des Empfangssignals geeignet sind.

Die Einrichtung 116 zum Entzerren des Empfangssignals und zum Liefern eines ersten entzerrten Empfangssignals weist vorzugsweise ein programmierbares Filter 122 auf, dessen Entzerrung über Filterkoeffizienten durch die Einrichtung 118 einstellbar ist. Die Einrichtung 116 zum Entzerren weist ferner einen ersten Speicher 124 zum Speichern eines ersten Satzes von Filterkoeffizienten und einen zweiten Speicher 126 zum Speichern eines zweiten Satzes von Filterkoeffizienten auf. Der erste Satz von Filterkoeffizienten weist vorzugsweise Filterkoeffizienten auf, die bei der Initialisierung einer Übertragung von Sendesignalen bzw. bei einem Kaltstart verwendet werden, und kann ferner verschiedene Koeffizienten enthalten, über die die Einrichtung 116 zum Entzerren bei dem Betrieb unterschiedlich eingestellt werden kann. Der zweite Satz von Filterkoeffizienten wird vorzugsweise durch die Einrichtung 118 zum Einstellen der einstellbaren Entzerrung geliefert und enthält vorzugsweise die momentane Entzerrer-Einstellung im Hinblick auf einen Warmstart.

Für die Funktion der Vorrichtung gemäß der vorliegenden Erfindung wird davon ausgegangen, dass es Zeitabschnitte gibt, während derer das Sendesignal die für eine automatische Adaption in der Einrichtung 118 zum Einstellen erforderlichen Eigenschaften aufweist. Mittels der Einrichtung 120 zum Überwachen des Empfangssignals bzw. mittels eines Monitors können die statistischen Eigenschaften des Sendesignals überwacht werden und die Zeitabschnitte bestimmt werden, in denen das Sendesignal bzw. das zugeordnete Empfangssignal für die Adaption geeignet ist. Während solcher Zeitabschnitte kann dann eine automatische Koeffizientenadaption durch die Einrichtung 118 zum Einstellen aktiviert werden. Dabei können für die Adaption unterschiedliche, aus der Literatur bekannte Verfahren verwendet werden. Liegt kein geeignetes Empfangssignal für die automatische Adaption vor, ist die Adaption durch die Einrichtung 118 zum Einstellen der einstellbaren Entzerrung zu deaktivieren. In gewissen Zeitabständen können die durch die Einrichtung 118 zum Einstellen mittels Adaption ermittelten Koeffizienten in das programmierbare Filter 122 übernommen werden. Es ist zweckmäßig, die neu übernommenen Koeffizienten in dem zweiten Speicher 126 abzulegen. Diese Koeffizienten sind dann beispielsweise für einen eventuellen Warmstart erneut verfügbar. Die Übernahme der Koeffizienten von der Einrichtung 118 zum Einstellen in den zweiten Speicher 126 der Einrichtung 116 zum Entzerren kann in regelmäßigen Zeitabständen, gesteuert durch die Einrichtung 118 zum Einstellen, aber auch durch die Einrichtung 120 zum Überwachen des Empfangssignals über Schalter 140, erfolgen. Es ist jedoch vorteilhaft, mittels einer geeigneten Kostenfunktion zu prüfen, ob die Koeffizienteneinstellung überhaupt eine Verbesserung der Empfangseigenschaften liefert. Auf diesem Wege kann die Übernahme fehlerhafter oder ungünstiger Koeffizienteneinstellungen, die angesichts der geschilderten Probleme mit dem Sendespektrum nicht auszuschließen sind, vermieden werden.

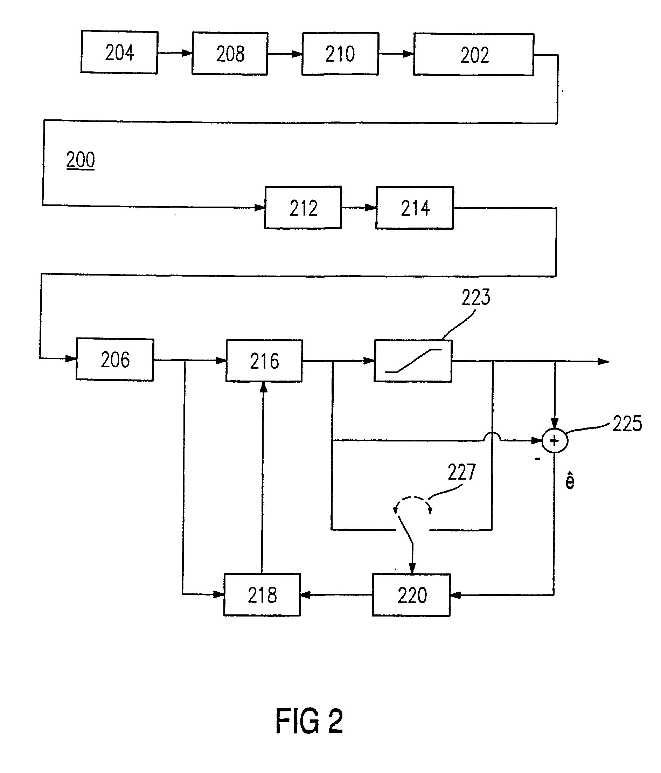

Fig. 2 zeigt ein erstes Ausführungsbeispiel einer Vorrichtung zum Entzerren eines Empfangssignals, das einem Sendesignal, das in ein verzerrendes Übertragungssystem 200 gesendet wird, zugeordnet ist, wobei das Sendesignal Zeitabschnitte aufweist, in denen dasselbe bestimmte Eigenschaften, wie z. B. ein weißes Frequenzspektrum, besitzt, die zum Analysieren der durch das Übertragungssystem 200 verursachten Verzerrung des Empfangssignals und zum Einstellen der Entzerrung des Empfangssignals geeignet sind. Wie bereits in Fig. 1 gezeigt weist das Übertragungssystem 200 vorzugsweise einen Übertragungskanal 202 auf, der zwischen einem digitalen Sender 204 und einem Empfänger, der aus den Komponenten 212, 214 und 206 besteht, angeordnet ist. Hinter dem digitalen Sender 204 sind vorzugsweise ein Digital-Analog-Wandler 208 gefolgt von weiteren analogen Komponenten 210 angeordnet. Der Empfangspfad weist analoge Komponenten 212, z. B. Anti-Alias-Filter, einen Analog-Digital-Wandler 214 und weitere digitale Komponenten 206, wie Einrichtungen zur Abtastratenerhöhung bzw. Abtastratenreduzierung, auf. Die Vorrichtung zum Entzerren des Empfangssignals empfängt das Empfangssignal von den digitalen Komponenten 206.

Die Vorrichtung zum Entzerren eines Empfangssignals weist eine Einrichtung 216 zum Entzerren des Empfangssignals und zum Liefern eines ersten entzerrten Empfangssignals auf, die eine einstellbare Entzerrung besitzt. Die Vorrichtung zum Entzerren eines Empfangssignals weist ferner eine Einrichtung 218 zum Einstellen der einstellbaren Entzerrung der Einrichtung 216 zum Entzerren des Empfangssignals abhängig von dem Empfangssignal und eine Einrichtung 220 zum Überwachen des Empfangssignals und zum Aktivieren der Einrichtung 218 zum Einstellen auf, wenn das dem Empfangssignal zugeordnete Sendesignal die bestimmten Eigenschaften besitzt.

Ähnlich wie in Fig. 1 weist die Einrichtung 216 zum Entzerren des Empfangssignals vorzugsweise ein programmierbares Filter auf, dessen Entzerrung über Filterkoeffizienten durch die Einrichtung 218 zum Einstellen einstellbar ist. Das programmierbare Filter kann dabei einen ersten Speicher zum Speichern eines ersten Satzes von Filterkoeffizienten, der vorzugsweise bei der Initialisierung (Kaltstart) einer Übertragung von Sendesignalen verwendet wird, und einen zweiten Speicher zum Speichern eines zweiten Satzes von Filterkoeffizienten, der von der Einrichtung 218 zum Einstellen geliefert wird und aus einer Adaption bzw. Optimierung erhalten wird, aufweisen.

Die Einrichtung 220 zum Überwachen des Empfangssignals weist vorzugsweise eine Filterbank auf, um die Energieverteilung in dem Empfangssignal zu bestimmen. Die Filterbank gestattet es, auszuwerten, ob das geschätzte Sendespektrum in allen Frequenzbereichen eine ausreichende Energie aufweist, wobei das nominelle Sendespektrum als Referenz dient. Bei vielen Fällen ist dafür eine Filterbank mit einer kleinen Anzahl von Bandpaßfiltern ausreichend. Alternativ zu einer solchen modularen und regulären Anordnung mit den bekannten Vorteilen hinsichtlich einer Implementierung auf kleiner Fläche und mit geringer Verlustleistung kann die Einrichtung 220 zum Überwachen des Empfangssignals alternativ oder zusätzlich eine Fourier-Transformation, wie z. B. eine diskrete Fourier-Transformation oder eine FFT (= Fast Fourier Transform), durchführen, um die Energieverteilung in dem Empfangssignal zu bestimmen.

Die Vorrichtung zum Entzerren eines Empfangssignals weist ferner eine Einrichtung 223 zum Entscheiden und zum Liefern eines Schätzsignals, die die gesendeten Symbole des Sendesignals schätzt und die geschätzten Symbole mit dem Schätzsignal liefert, und eine Einrichtung 225 zum Liefern eines Fehlersignals e auf, die das Fehlersignal e aus der Differenz des Schätzsignals, das von der Einrichtung 223 zum Entscheiden geliefert wird, und des entzerrten Empfangssignals, das von der Einrichtung 216 zum Entzerren geliefert wird, bestimmt.

Wie in Fig. 2 gezeigt, bestimmt die Einrichtung 218 die einstellbare Entzerrung der Einrichtung 216 zum Entzerren des Empfangssignals automatisch aus dem Empfangssignal und dem ersten Fehlersignal ê. Die einstellbare Entzerrung der Einrichtung 216 zum Entzerren des Empfangssignals wird dabei vorzugsweise aus der Korrelation des Empfangssignals und des Fehlersignals e abgeleitet. Die Einrichtung 220 zum Überwachen des Empfangssignals schaltet das Fehlersignal zu der Einrichtung 218 zum Einstellen der einstellbaren Entzerrung zum Aktualisieren der Einstellung der Einrichtung 216 durch und aktiviert die Einrichtung 218 zum Einstellen, wenn das dem Empfangssignal zugeordnete Sendesignal die bestimmten Eigenschaften, wie z. B. ein weißes Frequenzspektrum bzw. eine ausreichende Signalenergie in allen Frequenzbereichen, aufweist. Die Einrichtung 220 zum Überwachen des Empfangssignals überwacht wählbar entweder das entzerrte Empfangssignal, das von der Einrichtung 216 zum Entzerren des Empfangssignals geliefert wird, oder das Schätzsignal, das von der Einrichtung 223 in Form einer Entscheidung bezüglich des verwendeten Symbolalphabetes geliefert wird.

Fig. 2 stellt diese beiden möglichen Optionen, die über den Schalter 227 ausgewählt werden können, dar. Die erste Option besteht wie erwähnt in der Auswahl des durch die Einrichtung 216 zum Entzerren entzerrten Empfangssignals vor der Einrichtung 223 zum Entscheiden, die beispielsweise verwendet wird, wenn die Einrichtung 216 zum Entzerren nahe ihres Optimums eingestellt ist, und die Fehler praktisch nicht mit dem Sendesignal korreliert sind, und somit eine sinnvolle Überwachung möglich ist. Die zweite Option besteht in der Auswahl des Schätzsignals nach der Einrichtung 223 zum Entscheiden, die vorteilhaft ist, wenn durch die Einrichtung 223 zum Entscheiden eine fehlerfreie Schätzung der gesendeten Symbole erfolgt und daher kein Fehlerbeitrag in die Einrichtung 220 zum Überwachen des Empfangssignals eingeht. Angesichts der unter Umständen starken Verzerrungen im Übertragungskanal 202 kommt für eine Überwachung des Sendespektrums hauptsächlich das entzerrte Empfangssignal nach der Einrichtung 223 zum Entscheiden in Frage, auf dessen Grundlage die gesendeten Symbole geschätzt werden können.

Die Koeffizientenadaption in Fig. 2 ist für den sogenannten MMSE-Algorithmus gezeigt, bei dem die Aktualisierung der einzelnen Koeffizienten aus der Korrelation des Empfangssignals bzw. des Eingangssignals der Einrichtung 216 zum Entzerren mit dem entsprechend verzögerten Fehlersignal e nach der Einrichtung 223 zum Entscheiden abgeleitet wird. Dieser Algorithmus wird vorzugsweise auch in den folgenden Ausführungsbeispielen verwendet.

Da nicht sichergestellt werden kann, wie lang die zur Adaption verfügbaren Zeitabschnitte sind und in welchem zeitlichen Abstand diese aufeinanderfolgen, ist die Adaptionsgeschwindigkeit des Verfahrens von vornherein nicht bekannt. Zudem kann trotz der Überwachung der Daten nicht ausgeschlossen werden, dass die Einrichtung 216 zum Entzerren zwischenzeitlich eine z. B. bezüglich des mittleren quadratischen Fehlers (MSE) nach der Einrichtung 223 zum Entscheiden ungünstige Einstellung annimmt und nur sehr langsam in Richtung auf das Optimum der Entzerrung konvergiert. Leistungseinbußen aufgrund solcher "Falschfangzustände" können umgangen werden, wenn eine zusätzliche zweite Einrichtung zum Entzerren eines Empfangssignals bzw. ein zusätzlicher adaptiver Entzerrer, der auch "Schattenentzerrer" genannt wird, parallel zum Empfangspfad mit der ersten Einrichtung zum Entzerren des Empfangssignals vorgesehen wird, wie dies im Folgenden beschrieben ist.

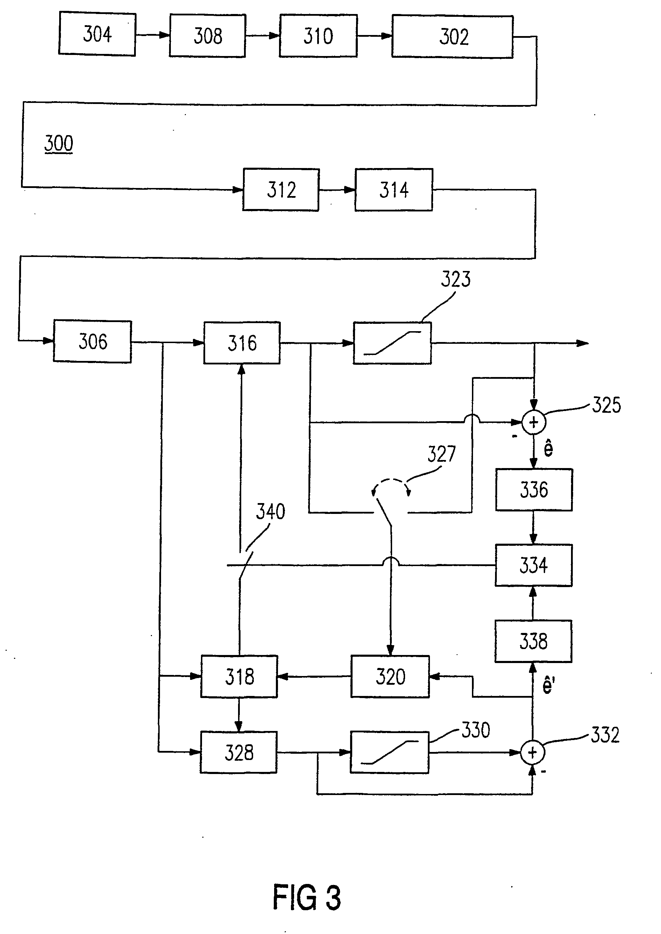

Fig. 3 zeigt ein zweites Ausführungsbeispiel gemäß der vorliegenden Erfindung, und die in Fig. 3 gezeigten Elemente, die sich lediglich durch die erste Ziffer des Bezugszeichens von den Elementen in Fig. 2 unterscheiden, stellen gleiche oder funktionsgleiche Bestandteile dar und sind im Folgenden nicht nochmals beschrieben. Dies gilt ebenso für die folgenden weiteren Figuren.

Bezugnehmend auf Fig. 3 weist die Vorrichtung zum Entzerren zusätzlich zu einer ersten Einrichtung 316 zum Entzerren des Empfangssignals und zum Liefern eines ersten entzerrten Empfangssignals einen Schattenentzerrer bzw. eine zweite Einrichtung 328 zum Entzerren des Empfangssignals und zum Liefern eines zweiten entzerrten Empfangssignals auf, wobei die zweite Einrichtung 328 zum Entzerren des Empfangssignals eine zweite einstellbare Entzerrung aufweist, die sich von der ersten einstellbaren Entzerrung der ersten Einrichtung 316 zum Entzerren unterscheidet. Die Vorrichtung zum Entzerren eines Empfangssignals weist ferner zusätzlich zu der ersten Einrichtung 323 zum Entscheiden und zum Liefern eines ersten Schätzsignals eine zweite Einrichtung 330 zum Entscheiden und zum Liefern eines zweiten Schätzsignals auf, die die gesendeten Symbole des Sendesignals schätzt und die geschätzten Symbole in einem zweiten Schätzsignal liefert.

Die Vorrichtung zum Entzerren eines Empfangssignals weist im Vergleich zu dem ersten Ausführungsbeispiel von Fig. 2 ferner zusätzlich zu der ersten Einrichtung 325 zum Liefern eines ersten Fehlersignals ê eine zweite Einrichtung 332 zum Liefern eines zweiten Fehlersignals ê' auf, die das zweite Fehlersignal ê' aus der Differenz des zweiten Schätzsignals, das von der zweiten Einrichtung 330 zum Entscheiden geliefert wird, und des zweiten entzerrten Empfangssignals, das von der zweiten Einrichtung 328 zum Entzerren des Empfangssignals geliefert wird, bestimmt.

Die Einrichtung 318 zum Einstellen der einstellbaren Entzerrung des Empfangssignals bestimmt bei diesem zweiten Ausführungsbeispiel die zweite einstellbare Entzerrung der zweiten Einrichtung 328 zum Entzerren des Empfangssignals aus dem Empfangssignal und dem zweiten Fehlersignal ê', das von der zweiten Einrichtung 332 zum Liefern eines zweiten Fehlersignals ê' geliefert wird. Die Einrichtung 318 zum Einstellen bzw. zur automatischen Aktualisierung der Einstellung der zweiten Einrichtung 328 zum Entzerren leitet die einstellbare Entzerrung vorzugsweise aus der Korrelation des Empfangssignals und des zweiten Fehlersignals ê' ab.

Die Einrichtung 320 zum Überwachen des Empfangssignals schaltet das zweite Fehlersignal ê' zu der Einrichtung 318 zum Einstellen durch und aktiviert die Einrichtung 318 zum Einstellen der einstellbaren Entzerrung, wenn das dem Empfangssignal zugeordnete Sendesignal bestimmte Eigenschaften, wie z. B. ein weißes Frequenzspektrum, aufweist. Die Einrichtung 320 zum Überwachen des Empfangssignals liefert wie bei dem ersten Ausführungsbeispiel wählbar über einen Schalter 327 entweder das erste entzerrte Empfangssignal, das von der ersten Einrichtung 316 zum Entzerren des Empfangssignals geliefert wird, oder das erste Schätzsignal, das von der ersten Einrichtung 323 zum Entscheiden geliefert wird.

Die Vorrichtung zum Entzerren eines Empfangssignals gemäß dem zweiten Ausführungsbeispiel weist im Gegensatz zu den ersten Ausführungsbeispiel ferner eine Einrichtung 334 zum Vergleichen auf, die ein erstes Gütemaß, das aus dem ersten Fehlersignal ê abgeleitet wird, und ein zweites Gütemaß, das aus dem zweiten Fehlersignal ê' abgeleitet wird, vergleicht, und wenn das zweite Gütemaß größer als das erste Gütemaß ist, bewirkt, dass die eingestellte Entzerrung der zweiten Einrichtung 328 zum Entzerren des Empfangssignals von der Einrichtung 318 mittels eines Schalters 340 zu der ersten Einrichtung 316 zum Entzerren des Empfangssignals geliefert wird. Vor der Einrichtung 334 zum Vergleichen des ersten und des zweiten Gütemaßes sind für die Ermittlung des ersten und des zweiten Gütemaßes vorzugsweise eine erste Einrichtung 336 zum Ermitteln eines ersten Gütemaßes und eine zweite Einrichtung 338 zum Ermitteln eines zweiten Gütemaßes angeordnet, die beispielsweise das erste und das zweite Gütemaß aus den mittleren quadratischen Fehlern des ersten Fehlersignals ê bzw. des zweiten Fehlersignals ê' ableiten und an die Einrichtung 334 zum Vergleichen liefern.

Wenn die zweite Einrichtung 328 zum Entzerren eines Empfangssignals ein programmierbares Koeffizientenfilter aufweist, ist für die Koeffizientenadaption der zweiten Einrichtung 328 zum Entzerren des Empfangssignals der Fehler ê' zu nutzen, der nach der zweiten Einrichtung 330 zum Entscheiden ermittelt wird, die auf die zweite Einrichtung 328 zum Entzerren eines Empfangssignals folgt.

Wie bereits erwähnt, kann das Sendespektrum von dem Ideal eines flachen Basisbandsignals mit einer Tiefpaßcharakteristik abweichen. Diese Abweichung ist, wie oben bereits erwähnt, in Form eines Referenzspektrums in den Einrichtungen 220, 320 zum Überwachen in Fig. 2 und 3 zu berücksichtigen.

Wie bei den im Folgenden beschriebenen Ausführungsbeispielen erreicht man eine Verbesserung des Konvergenzverhaltens in der Regel jedoch dadurch, dass man ein Formungsfilter verwendet, das den Unterschied zum idealen Spektrum möglichst weitgehend ausgleicht. Auf diese Weise kann beispielsweise im Übertragungsband ein möglichst flaches Spektrum erreicht werden. Für die Signalverarbeitung hinter einem Formungsfilter ergibt sich ein neues Referenzspektrum. Für die Erweiterung der Strukturen gemäß der vorliegenden Erfindung um ein Formungsfilter gibt es verschiedene Varianten. Es ist jedoch immer darauf zu achten, dass nur Signale verknüpft werden, die sich auf dasselbe Referenzspektrum beziehen, wie z. B. die Korrelation von einem Signal vor einer Einrichtung zum Entzerren des Fehlersignals nach einer Einrichtung zum Entscheiden. Deshalb wird es in der Regel erforderlich sein, mehrere Formungsfilter an unterschiedlichen Stellen der Signalverarbeitung einzufügen.

Die Einführung eines Formungsfilters ist insbesondere bei einer Signalverarbeitung parallel zum direkten Empfangspfad, wie beispielsweise der in Fig. 3 gezeigten zweiten Einrichtung zum Entzerren eines Empfangssignals bzw. dem Schattenentzerrer, zweckmäßig, da das empfangene Spektrum im Vergleich zum Sendespektrum nicht "geformt" sein darf. Das Einfügen eines Formungsfilters und eines nachfolgenden Formungsfilters, das eine inverse Filterfunktion zu der Filterfunktion des ersten Formungsfilters aufweist, in den direkten Empfangspfad, ist in der Praxis jedoch nicht sinnvoll.

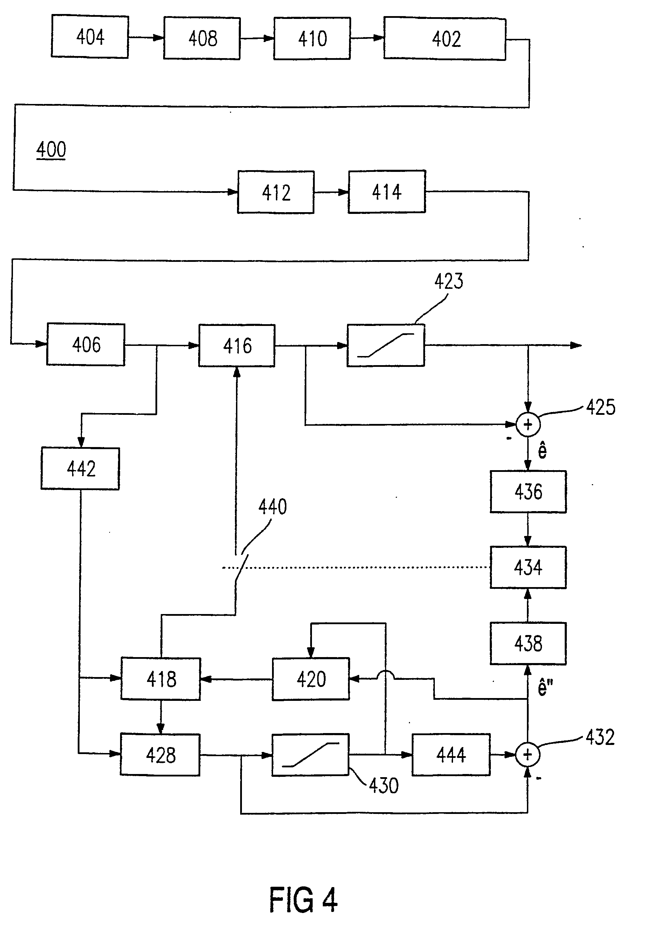

Fig. 4 zeigt ein drittes Ausführungsbeispiel einer Vorrichtung gemäß der vorliegenden Erfindung. Die Einrichtung 420 zum Überwachen des Empfangssignals überwacht im Gegensatz zu dem zweiten Ausführungsbeispiel wählbar entweder das zweite entzerrte Empfangssignal, das von der zweiten Einrichtung 428 zum Entzerren des Empfangssignals geliefert wird, oder das zweite Schätzsignal, das von der zweiten Einrichtung 430 zum Entscheiden geliefert wird, also Signale nach dem Schattenentzerrer.

Die Vorrichtung zum Entzerren eines Empfangssignals umfasst ferner im Gegensatz zu dem zweiten Ausführungsbeispiel von Fig. 3 ein erstes Formungsfilter 442, das der zweiten Einrichtung 428 zum Entzerren des Empfangssignals und der Einrichtung 418 zum Einstellen bzw. zur automatischen Aktualisierung der Entzerrer-Einstellung ein geformtes Empfangssignal liefert, und ein zweites Formungsfilter 444, das eine zu dem ersten Formungsfilter 442 entsprechende Filterfunktion aufweist und der Einrichtung 432 zum Liefern eines zweiten Fehlersignals ê" ein geformtes zweites Schätzsignal liefert. Das zweite Formungsfilter 444, das hinter der zweiten Einrichtung 430 zum Entscheiden angeordnet ist, gewährleistet, dass die Berechnung des zweiten Fehlers ê" nach der zweiten Einrichtung 430 zum Entscheiden bezüglich der gleichen Referenz erfolgt, auf die sich auch das geformte Empfangssignal für die Einrichtung 418 zum Einstellen der einstellbaren Entzerrung bezieht. Der so ermittelte Fehler ê" bzw. das so ermittelte zweite Fehlersignal ê" ist nicht identisch zu dem ermittelten Fehler ê' bzw. dem zweiten Fehlersignal e' von Fig. 3. Das Fehlersignal ê' ergibt sich aus ê" mittels eines Formungsfilters dessen Filterfunktion invers zu der Filterfunktion des zweiten Formungsfilters 444 ist. Der Fehler ê" kann jedoch für die MMSE-Berechnung in erster Näherung verwendet werden.

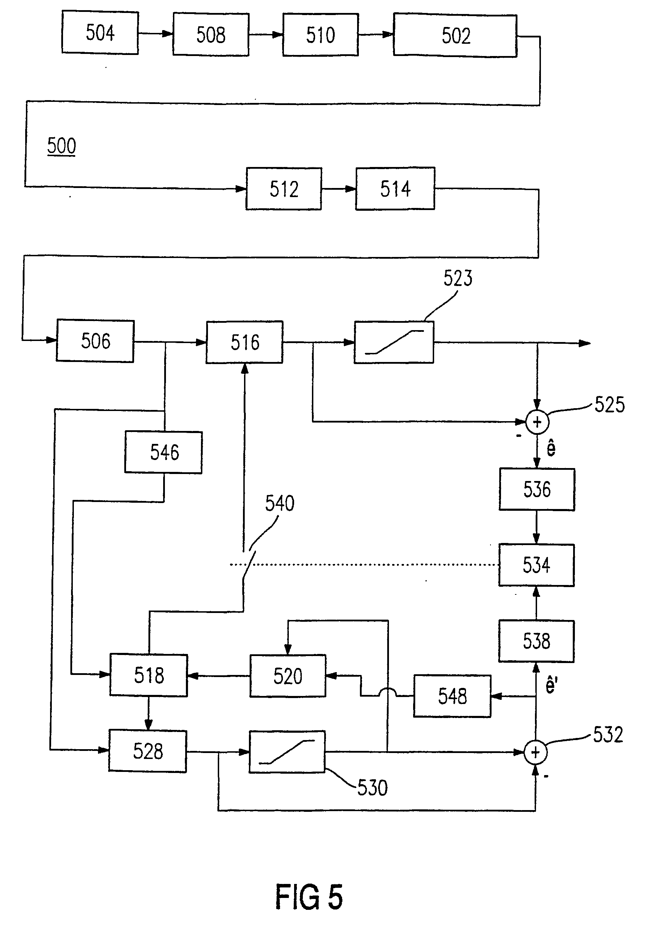

Fig. 5 zeigt ein viertes Ausführungsbeispiel gemäß der vorliegenden Erfindung. Im Gegensatz zu dem dritten Ausführungsbeispiel von Fig. 4 sind bei diesem Ausführungsbeispiel ein erstes Formungsfilter 546, das der Einrichtung 518 zum Einstellen der einstellbaren Entzerrung ein geformtes Empfangssignal liefert, und ein zweites Formungsfilter 548, das eine zu dem ersten Formungsfilter 546 identische Filterfunktion aufweist und der Einrichtung 520 zum Überwachen des Empfangssignals ein geformtes zweites Fehlersignal ê' liefert, vorgesehen.

Obwohl die vorliegende Erfindung vorstehend anhand mehrerer bevorzugter Ausführungsbeispiele beschrieben ist, ist dieselbe nicht darauf beschränkt, sondern auf vielfältige Art und Weise modifizierbar.

### Bezugszeichenliste:

- 100: Übertragungssystem
- 102: Übertragungskanal
- 104: digitaler Sender
- 106: digitale Komponenten
- 108: Digital-Analog-Wandler
- 110: analoge Komponenten
- 112: analoge Empfangskomponenten
- 114: Analog-Digital-Wandler
- 116: Einrichtung zum Entzerren des Empfangssignals
- 118: Einrichtung zum Einstellen der einstellbaren Entzerrung
- 120: Einrichtung zum Überwachen des Empfangssignals
- 122: programmierbares Filter
- 124: erster Speicher
- 126: zweiter Speicher
- 200: Übertragungssystem
- 202: Übertragungskanal
- 204: digitaler Sender
- 206: digitale Komponenten
- 208: Digital-Analog-Wandler
- 210: analoge Komponenten
- 212: analoge Empfangskomponenten
- 214: Analog-Digital-Wandler
- 216: Einrichtung zum Entzerren des Empfangssignals
- 218: Einrichtung zum Einstellen der einstellbaren Entzerrung
- 220: Einrichtung zum Überwachen des Empfangssignals
- 223: Einrichtung zum Entscheiden
- 225: Einrichtung zum Liefern
- 227: Schalter
- 300: Übertragungssystem
- 302: Übertragungskanal
- 304: digitaler Sender
- 306: digitale Komponenten
- 308: Digital-Analog-Wandler
- 310: analoge Komponenten
- 312: analoge Empfangskomponenten
- 314: Analog-Digital-Wandler
- 316: erste Einrichtung zum Entzerren des Empfangssignals
- 318: Einrichtung zum Einstellen der einstellbaren Entzerrung
- 320: Einrichtung zum Überwachen des Empfangssignals
- 323: erste Einrichtung zum Entscheiden
- 325: erste Einrichtung zum Liefern
- 327: Schalter
- 328: zweite Einrichtung zum Entzerren des Empfangssignals
- 330: zweite Einrichtung zum Entscheiden
- 332: zweite Einrichtung zum Liefern
- 334: Einrichtung zum Vergleichen
- 336: erste Einrichtung zum Ermitteln
- 338: zweite Einrichtung zum Ermitteln
- 400: Übertragungssystem
- 402: Übertragungskanal
- 404: digitaler Sender
- 406: digitale Komponenten
- 408: Digital-Analog-Wandler
- 410: analoge Komponenten
- 412: analoge Empfangskomponenten
- 414: Analog-Digital-Wandler
- 416: erste Einrichtung zum Entzerren des Empfangssignals
- 418: Einrichtung zum Einstellen der einstellbaren Entzerrung
- 420: Einrichtung zum Überwachen des Empfangssignals
- 423: erste Einrichtung zum Entscheiden
- 425: erste Einrichtung zum Liefern
- 428: zweite Einrichtung zum Entzerren des Empfangssignals
- 430: zweite Einrichtung zum Entscheiden
- 432: zweite Einrichtung zum Liefern
- 434: Einrichtung zum Vergleichen
- 436: erste Einrichtung zum Ermitteln
- 438: zweite Einrichtung zum Ermitteln
- 442: erste Einrichtung zum formenden Filtern
- 444: zweite Einrichtung zum formenden Filtern
- 500: Übertragungssystem
- 502: Übertragungskanal
- 504: digitaler Sender
- 506: digitale Komponenten
- 508: Digital-Analog-Wandler
- 510: analoge Komponenten
- 512: analoge Empfangskomponenten
- 514: Analog-Digital-Wandler
- 516: erste Einrichtung zum Entzerren des Empfangssignals
- 518: Einrichtung zum Einstellen der einstellbaren Entzerrung
- 520: Einrichtung zum Überwachen des Empfangssignals
- 523: erste Einrichtung zum Entscheiden
- 525: erste Einrichtung zum Liefern
- 528: zweite Einrichtung zum Entzerren des Empfangssignals
- 530: zweite Einrichtung zum Entscheiden
- 532: zweite Einrichtung zum Liefern
- 534: Einrichtung zum Vergleichen
- 536: erste Einrichtung zum Ermitteln
- 538: zweite Einrichtung zum Ermitteln
- 546: erste Einrichtung zum formenden Filtern
- 548: zweite Einrichtung zum formenden Filtern

## Patentansprüche

1. Vorrichtung zum Entzerren eines Empfangssignals, das einem Sendesignal, das in einem verzerrenden Übertragungssystem (100; 200; 300; 400; 500) gesendet wird, zugeordnet ist, wobei das Sendesignal durch Analyse des Empfangssignales bestimmbare Zeitabschnitte aufweist, in denen dasselbe bestimmte Eigenschaften aufweist, die zum Einstellen einer Entzerrung der durch das Übertragungssystem (100; 200; 300; 400; 500) verursachten Verzerrung des Empfangssignals geeignet sind, mit folgenden Merkmalen:
- einer ersten Einrichtung (116; 216; 316; 416; 516) zum Entzerren des Empfangsignals und zum Liefern eines ersten entzerrten Empfangssignals, wobei die erste Einrichtung (116; 216; 316; 416; 516) zum Entzerren des Empfangssignals eine erste einstellbare Entzerrung aufweist;
- einer Einrichtung (118; 218; 318; 418; 518) zum Einstellen von mindestens der ersten einstellbaren Entzerrung der ersten Einrichtung (116; 216; 316; 416; 516) zum Entzerren des Empfangssignals abhängig von einem Analysieren des Empfangssignals; und
- einer Einrichtung (120; 220; 320; 420; 520) zum Überwachen und Analysieren des Empfangssignals und zum Aktivieren der Einrichtung (118; 218; 318; 418; 518) zum Einstellen der einstellbaren Entzerrung, wobei die Einrichtung (120; 220; 320; 420; 520) zum Überwachen und Analysieren des Empfangssignals eingerichtet ist statistische Eigenschaften des Sendesignals zu überwachen und dabei die Zeitabschnitte zu bestimmen in denen das Empfangssignal für eine Adaption durch Einstellung der Entzerrung geeignet ist.

2. Vorrichtung nach Anspruch 1, die ferner eine erste Einrichtung (223; 323; 423; 523) zum Entscheiden und zum Liefern eines ersten Schätzsignals aufweist, die die gesendeten Symbole des Sendesignals schätzt und die geschätzten Symbole in dem ersten Schätzsignal liefert.

3. Vorrichtung nach Anspruch 2, die ferner eine erste Einrichtung (225; 325; 425; 525) zum Liefern eines ersten Fehlersignals (ê) aufweist, die das erste Fehlersignal (ê) aus der Differenz des ersten Schätzsignals, das von der ersten Einrichtung (223; 323; 423; 523) zum Entscheiden geliefert wird, und des ersten entzerrten Empfangssignals, das von der ersten Einrichtung (216; 316; 416; 516) zum Entzerren geliefert wird, bestimmt.

4. Vorrichtung nach Anspruch 3, bei der die Einrichtung (218) zum Einstellen der einstellbaren Entzerrung die erste einstellbare Entzerrung der ersten Einrichtung zum Entzerren des Empfangssignals aus dem Empfangssignal und dem ersten Fehlersignal (ê) bestimmt.

5. Vorrichtung nach Anspruch 4, bei der die Einrichtung (218) zum Einstellen der einstellbaren Entzerrung die erste einstellbare Entzerrung der ersten Einrichtung zum Entzerren des Empfangssignals aus der Korrelation des Empfangssignals und des ersten Fehlersignals (ê) ableitet.

6. Vorrichtung nach Anspruch 3, 4 oder 5, bei der die Einrichtung (220) zum Überwachen des Empfangssignals das erste Fehlersignal (ê) zu der Einrichtung (218) zum Einstellen der einstellbaren Entzerrung durchschaltet (227) und die Einrichtung (218) zum Einstellen der einstellbaren Entzerrung aktiviert, wenn das dem Empfangssignal zugeordnete Sendesignal die bestimmten Eigenschaften aufweist.

7. Vorrichtung nach einem der Ansprüche 1 bis 3, die ferner eine zweite Einrichtung (328; 428; 528) zum Entzerren des Empfangsignals und zum Liefern eines zweiten entzerrten Empfangssignals aufweist, wobei die zweite Einrichtung (328; 428; 528) zum Entzerren des Empfangssignals eine zweite einstellbare Entzerrung aufweist.

8. Vorrichtung nach Anspruch 7, die ferner eine zweite Einrichtung (330; 430; 530) zum Entscheiden und zum Liefern eines zweiten Schätzsignals aufweist, die die gesendeten Symbole des Sendesignals schätzt und die geschätzten Symbole in dem zweiten Schätzsignal liefert.

9. Vorrichtung nach Anspruch 8, die ferner eine zweite Einrichtung (332; 432; 532) zum Liefern eines zweiten Fehlersignals (ê'; ê") aufweist, die das zweite Fehlersignal aus der Differenz des zweiten Schätzsignals, das von der zweiten Einrichtung (330; 430; 530) zum Entscheiden geliefert wird, und des zweiten entzerrten Empfangssignals, das von der zweiten Einrichtung (328; 428; 528) zum Entzerren des Empfangssignals geliefert wird, bestimmt.

10. Vorrichtung nach Anspruch 9, bei der die Einrichtung (318; 418; 518) zum Einstellen der einstellbaren Entzerrung die zweite einstellbare Entzerrung der zweiten Einrichtung (328; 428; 528) zum Entzerren des Empfangssignals aus dem Empfangssignal und dem zweiten Fehlersignal (ê'; ê") bestimmt.

11. Vorrichtung nach Anspruch 10, bei der die Einrichtung (318; 418; 518) zum Einstellen der einstellbaren Entzerrung die zweite einstellbare Entzerrung der zweiten Einrichtung (328; 428; 528) zum Entzerren des Empfangssignals aus der Korrelation des Empfangssignals und des zweiten Fehlersignals (ê'; ê") ableitet.

12. Vorrichtung nach einem der Ansprüche 9 bis 11, bei der die Einrichtung (320; 420; 520) zum Überwachen des Empfangssignals das zweite Fehlersignal (ê'; ê") zu der Einrichtung (318; 418; 518) zum Einstellen der einstellbaren Entzerrung durchschaltet und die Einrichtung (318; 418; 518) zum Einstellen der einstellbaren Entzerrung aktiviert, wenn das dem Empfangssignal zugeordnete Sendesignal die bestimmten Eigenschaften aufweist.

13. Vorrichtung nach einem der Ansprüche 9 bis 12, die ferner eine Einrichtung (334; 434; 534) zum Vergleichen aufweist, die ein erstes Gütemaß, das aus dem ersten Fehlersignal (ê) abgeleitet ist, und ein zweites Gütemaß, das aus dem zweiten Fehlersignal (ê'; ê") abgeleitet ist, vergleicht, und wenn das zweite Gütemaß größer als das erste Gütemaß ist, bewirkt, dass die eingestellte Entzerrung der zweiten Einrichtung (328; 428; 528) zum Entzerren des Empfangssignals von der Einrichtung (318; 418; 518) zum Einstellen der einstellbaren Entzerrung zu der ersten Einrichtung (316; 416; 516) zum Entzerren des Empfangssignals geliefert wird.

14. Vorrichtung nach Anspruch 13, bei der vor der Einrichtung zum Vergleichen (334; 434; 534) eine erste und eine zweite Einrichtung (336, 338; 436, 438; 536, 538) zum Ermitteln eines Gütemaßes angeordnet sind, die das erste und das zweite Gütemaß aus dem ersten Fehlersignal (ê) und dem zweiten Fehlersignal (ê'; ê") ableiten und an die Einrichtung (334; 434; 534) zum Vergleichen liefern.

15. Vorrichtung nach Anspruch 13 oder 14, bei der das erste und das zweite Gütemaß aus dem mittleren quadratischen Fehler des ersten Fehlersignals (ê) und des zweiten Fehlersignals (ê'; ê") abgeleitet sind.

16. Vorrichtung nach einem der Ansprüche 2 bis 15, bei der die Einrichtung zum Überwachen (220; 320; 420; 520) des Empfangssignals wählbar entweder das erste entzerrte Empfangssignal, das von der ersten Einrichtung (216; 316; 416; 516) zum Entzerren des Empfangssignals geliefert wird, oder das erste Schätzsignal, das von der ersten Einrichtung (223; 323; 423; 523) zum Entscheiden geliefert wird, überwacht.

17. Vorrichtung nach einem der Ansprüche 8 bis 16, bei der die Einrichtung (420; 520) zum Überwachen des Empfangssignals wählbar entweder das zweite entzerrte Empfangssignal, das von der zweiten Einrichtung (428; 528) zum Entzerren des Empfangssignals geliefert wird, oder das zweite Schätzsignal, das von der zweiten Einrichtung (430; 530) zum Entscheiden geliefert wird, überwacht.

18. Vorrichtung nach einem der Ansprüche 9 bis 17, die ferner ein erstes Formungsfilter (442), das der zweiten Einrichtung (428) zum Entzerren des Empfangssignals und der Einrichtung (418) zum Einstellen der einstellbaren Entzerrung ein geformtes Empfangssignal liefert, und ein zweites Formungsfilter (444) aufweist, das eine zu dem ersten Formungsfilter (442) entsprechende Filterfunktion aufweist und der Einrichtung (432) zum Liefern eines zweiten Fehlersignals (ê") ein geformtes zweites Schätzsignal liefert.

19. Vorrichtung nach einem der Ansprüche 9 bis 17, die ferner ein erstes Formungsfilter (546), das der Einrichtung (518) zum Einstellen der einstellbaren Entzerrung ein geformtes Empfangssignal liefert, und ein zweites Formungsfilter (548) aufweist, das eine zu dem ersten Formungsfilter (546) identische Filterfunktion aufweist und der Einrichtung (520) zum Überwachen des Empfangssignals ein geformtes zweites Fehlersignal (ê') liefert.

20. Vorrichtung nach einem der vorhergehenden Ansprüche, bei der die erste und/oder die zweite Einrichtung (116; 216; 316, 328; 416, 428; 516, 528) zum Entzerren des Empfangsignals ein programmierbares Filter aufweisen, dessen Entzerrung über Filterkoeffizienten durch die Einrichtung (118; 218; 318; 418; 518) zum Einstellen der einstellbaren Entzerrung einstellbar ist.

21. Vorrichtung nach Anspruch 20, bei der die erste und/oder die zweite Einrichtung (116) zum Entzerren des Empfangssignals ferner jeweils einen ersten Speicher (124) zum Speichern eines ersten Satzes von Filterkoeffizienten aufweisen.

22. Vorrichtung nach Anspruch 21, bei der der erste Satz von Filterkoeffizienten Filterkoeffizienten aufweist, die bei der Initialisierung einer Übertragung von Sendesignalen verwendet werden.

23. Vorrichtung nach Anspruch 20, 21 oder 22, bei der die erste und/oder die zweite Einrichtung (116) zum Entzerren des Empfangssignals ferner einen zweiten Speicher (126) zum Speichern eines zweiten Satzes von Filterkoeffizienten aufweisen.

24. Vorrichtung nach Anspruch 23, bei der der zweite Satz von Filterkoeffizienten Filterkoeffizienten aufweist, die von der Einrichtung (118) zum Einstellen der einstellbaren Entzerrung geliefert werden.

25. Vorrichtung nach einem der vorhergehenden Ansprüche, bei der die Einrichtung (120; 220; 320; 420; 520) zum Überwachen des Empfangssignals eine Filterbank aufweist, um die Energieverteilung in dem Empfangssignal zu bestimmen.

26. Vorrichtung nach Anspruch 25, bei der die Filterbank Bandpassfilter aufweist.

27. Vorrichtung nach einem der vorhergehenden Ansprüche, bei der die Einrichtung (120; 220; 320; 420; 520) zum Überwachen des Empfangssignals eine Fourier-Transformation durchführt, um die Energieverteilung in dem Empfangssignal zu bestimmen.

28. Vorrichtung nach einem der vorhergehenden Ansprüche, bei der Abweichungen des Sendesignals von einem flachen Basisbandspektrum mit einer Tiefpasscharakteristik in Form eines entsprechenden Referenzspektrums in der Einrichtung (120; 220; 320; 420; 520) zum Überwachen des Empfangssignals berücksichtigt werden.

29. Übertragungssystem (100; 200; 300; 400; 500) mit folgenden Merkmalen:
- einem Sender (104; 204; 304; 404; 504) zum Senden eines Sendesignals;
- einem Empfänger (106; 206; 306; 406: 506) zum Empfangen eines Empfangssignals;
- einem Übertragungskanal (102; 202; 302; 402; 502), der zwischen dem Sender (104; 204; 304; 404; 504) und dem Empfänger (106; 206; 306; 406: 506) angeordnet ist; und
- einer Vorrichtung zum Entzerren eines Empfangssignals nach einem der vorhergehenden Ansprüche, die mit dem Empfänger (106; 206; 306; 406: 506) verbunden ist.

30. Verfahren zum Entzerren eines Empfangssignals, das einem Sendesignal, das in einem verzerrenden Übertragungssystem (100; 200; 300; 400; 500) gesendet wird, zugeordnet ist, wobei das Sendesignal durch Analyse des Empfangssignals bestimmbare Zeitabschnitte aufweist, in denen dasselbe bestimmte Eigenschaften aufweist, die zum Einstellen einer Entzerrung der durch das Übertragungssystem (100; 200; 300; 400; 500) verursachten Verzerrung des Empfangssignals geeignet sind, mit folgenden Schritten:
- Entzerren des Empfangsignals mit einer einstellbaren Entzerrung und Liefern eines entzerrten Empfangssignals;
- Einstellen der einstellbaren Entzerrung abhängig von einem Analysieren des Empfangssignals; und
- Überwachen des Empfangssignals und Aktivieren des Einstellens der einstellbaren Entzerrung, wobei die statistischen Eigenschaften des Sendesignals überwacht werden und dabei diejenigen Zeitabschnitte bestimmt werden in denen das Empfangssignal für eine Adaption durch Einstellung der Entzerrung geeignet ist.

## Claims

1. Device for equalizing a received signal, which is assigned to a transmitted signal that is transmitted in a distorting transmission system (100; 200; 300; 400; 500), the transmitted signal having time segments that can be determined by analysis of the received signal in which the same has particular properties that are suitable for setting an equalization of the distortion of the received signal caused by the transmission system (100; 200; 300; 400; 500), with the following features:
- a first means (116; 216; 316; 416; 516) for equalizing the received signal and for supplying a first equalized received signal, the first means (116; 216; 316; 416; 516) for equalizing the received signal having a first settable equalization;
- a means (118; 218; 318; 418; 518) for setting at least the first settable equalization of the first means (116; 216; 316; 416; 516) for equalizing the received signal in accordance with an analysis of the received signal; and
- a means (120; 220; 320; 420; 520) for monitoring and analyzing the received signal and for activating the means (118; 218; 318; 418; 518) for setting the settable equalization, the means (120; 220; 320; 420; 520) for monitoring and analyzing the received signal being set up to monitor statistical properties of the transmitted signal and at the same time to determine the time segments in which the received signal is suitable for an adaptation by setting the equalization.

2. Device according to Claim 1, which also has a first means (223; 323; 423; 523) for taking decisions and for supplying a first estimate signal, which estimates the transmitted symbols of the transmitted signal and supplies the estimated symbols in the first estimate signal.

3. Device according to Claim 2, which also has a first means (225; 325; 425; 525) for supplying a first error signal (ê), which determines the first error signal (ê) from the difference between the first estimate signal, which is supplied by the first means (223; 323; 423; 523) for taking decisions, and the first equalized received signal, which is supplied by the first means (216; 316; 416; 516) for equalizing.

4. Device according to Claim 3, in which the means (218) for setting the settable equalization determines the first settable equalization of the first means for equalizing the received signal from the received signal and the first error signal (ê).

5. Device according to Claim 4, in which the means (218) for setting the settable equalization derives the first settable equalization of the first means for equalizing the received signal from the correlation of the received signal and the first error signal (ê).

6. Device according to Claim 3, 4 or 5, in which the means (220) for monitoring the received signal switches the first error signal (ê) through (227) to the means (218) for setting the settable equalization and activates the means (218) for setting the settable equalization when the transmitted signal assigned to the received signal has the particular properties.

7. Device according to one of Claims 1 to 3, which also has a second means (328; 428; 528) for equalizing the received signal and for supplying a second equalized received signal, the second means (328; 428; 528) for equalizing the received signal having a second settable equalization.

8. Device according to Claim 7, which also has a second means (330; 430; 530) for taking decisions and for supplying a second estimate signal, which estimates the transmitted symbols of the transmitted signal and supplies the estimated symbols in the second estimate signal.

9. Device according to Claim 8, which also has a second means (332; 432; 532) for supplying a second error signal (ê'; ê''), which determines the second error signal from the difference between the second estimate signal, which is supplied by the second means (330; 430; 530) for taking decisions, and the second equalized received signal, which is supplied by the second means (328; 428; 528) for equalizing the received signal.

10. Device according to Claim 9, in which the means (318; 418; 518) for setting the settable equalization determines the second settable equalization of the second means (328; 428; 528) for equalizing the received signal from the received signal and the second error signal (ê'; ê'').

11. Device according to Claim 10, in which the means (318; 418; 518) for setting the settable equalization derives the second settable equalization of the second means (328; 428; 528) for equalizing the received signal from the correlation of the received signal and the second error signal (ê'; ê").

12. Device according to one of Claims 9 to 11, in which the means (320; 420; 520) for monitoring the received signal switches the second error signal (ê'; ê") through to the means (318; 418; 518) for setting the settable equalization and activates the means (318; 418; 518) for setting the settable equalization when the transmitted signal assigned to the received signal has the particular properties.

13. Device according to one of Claims 9 to 12, which also has a means (334; 434; 534) for comparing, which compares a first quality level, which is derived from the first error signal (ê), and a second quality level, which is derived from the second error signal (ê'; ê"), and, if the second quality level is greater than the first quality level, instigates that the set equalization of the second means (328; 428; 528) for equalizing the received signal is supplied by the means (318; 418; 518) for setting the settable equalization to the first means (316; 416; 516) for equalizing the received signal.

14. Device according to Claim 13, in which upstream of the means for comparing (334; 434; 534) there are arranged a first and a second means (336, 338; 436, 438; 536, 538) for ascertaining a quality level, which derive the first and second quality levels from the first error signal (ê) and the second error signal (ê'; ê") and supply them to the means (334; 434; 534) for comparing.

15. Device according to Claim 13 or 14, in which the first and second quality levels are derived from the mean square error of the first error signal (ê) and the second error signal (ê'; ê").

16. Device according to one of Claims 2 to 15, in which the means for monitoring (220; 320; 420; 520) the received signal monitors optionally either the first equalized received signal, which is supplied by the first means (216; 316; 416; 516) for equalizing the received signal, or the first estimate signal, which is supplied by the first means (223; 323; 423; 523) for taking decisions.

17. Device according to one of Claims 8 to 16, in which the means (420; 520) for monitoring the received signal monitors optionally either the second equalized received signal, which is supplied by the second means (428; 528) for equalizing the received signal, or the second estimate signal, which is supplied by the second means (430; 530) for taking decisions.

18. Device according to one of Claims 9 to 17, which also has a first shaping filter (442), which supplies a shaped received signal to the second means (428) for equalizing the received signal and the means (418) for setting the settable equalization, and a second shaping filter (444), which has a filter function corresponding to the first shaping filter (442) and supplies a shaped second estimate signal to the means (432) for supplying a second error signal (ê").

19. Device according to one of Claims 9 to 17, which also has a first shaping filter (546), which supplies a shaped received signal to the means (518) for setting the settable equalization, and a second shaping filter (548), which has a filter function identical to the first shaping filter (546) and supplies a shaped second error signal (ê') to the means (520) for monitoring the received signal.

20. Device according to one of the preceding claims, in which the first and/or the second means (116; 216; 316, 328; 416, 428; 516, 528) for equalizing the received signal have a programmable filter, the equalization of which can be set by means of filter coefficients by the means (118; 218; 318; 418; 518) for setting the settable equalization.

21. Device according to Claim 20, in which the first and/or second means (116) for equalizing the received signal also respectively have a first memory (124) for storing a first set of filter coefficients.

22. Device according to Claim 21, in which the first set of filter coefficients has filter coefficients which are used in the initialization of a transmission of transmitted signals.

23. Device according to Claim 20, 21 or 22, in which the first and/or second means (116) for equalizing the received signal also have a second memory (126) for storing a second set of filter coefficients.

24. Device according to Claim 23, in which the second set of filter coefficients has filter coefficients which are supplied by the means (118) for setting the settable equalization.

25. Device according to one of the preceding claims, in which the means (120; 220; 320; 420; 520) for monitoring the received signal has a filter bank, in order to determine the energy distribution in the received signal.

26. Device according to Claim 25, in which the filter bank has bandpass filters.

27. Device according to one of the preceding claims, in which the means (120; 220; 320; 420; 520) for monitoring the received signal carries out a Fourier transformation, in order to determine the energy distribution in the received signal.

28. Device according to one of the preceding claims, in which deviations of the transmitted signal from a flat baseband spectrum with a low-pass characteristic are taken into account in the means (120; 220; 320; 420; 520) for monitoring the received signal in the form of a corresponding reference spectrum.

29. Transmission system (100; 200; 300; 400; 500) with the following features:
- a transmitter (104; 204; 304; 409; 504) for transmitting a transmitted signal;
- a receiver (106; 206; 306; 406; 506) for receiving a received signal;
- a transmission channel (102; 202; 302; 402; 502), which is arranged between the transmitter (104; 204; 304; 404; 504) and the receiver (106; 206; 306; 406; 506); and
- a device for equalizing a received signal according to one of the preceding claims, which is connected to the receiver (106; 206; 306; 406; 506).

30. Method for equalizing a received signal, which is assigned to a transmitted signal that is transmitted in a distorting transmission system (100; 200; 300; 400; 500), the transmitted signal having time segments that can be determined by analysis of the received signal in which the same has particular properties that are suitable for setting an equalization of the distortion of the received signal caused by the transmission system (100; 200; 300; 400; 500), with the following steps:
- equalizing the received signal with a settable equalization and supplying an equalized received signal,
- setting the settable equalization in accordance with an analysis of the received signal; and
- monitoring the received signal and activating the setting of the settable equalization, the statistical properties of the transmitted signal being monitored and those time segments in which the received signal is suitable for an adaptation by setting the equalization being determined at the same time.

## Revendications

1. Dispositif pour corriger un signal de réception, qui est associé à un signal d'émission qui est émis dans un système de transmission (100 ; 200 ; 300 ; 400 ; 500) déformant, le signal d'émission comprenant des intervalles de temps, déterminables par l'analyse du signal de réception, dans lesquels celui-ci comporte des propriétés déterminées qui sont appropriées pour régler une correction de la distorsion du signal de réception provoquée par le système de transmission (100 ; 200 ; 300 ; 400 ; 500), avec les caractéristiques suivantes :
- un premier dispositif (116 ; 216 ; 316 ; 416 ; 516) pour corriger le signal de réception et pour délivrer un premier signal de réception corrigé, le premier dispositif (116 ; 216 ; 316 ; 416 ; 516) pour corriger le signal de réception comprenant une première correction réglable ;
- un dispositif (118 ; 218 ; 318 ; 418 ; 518) pour régler au moins la première correction réglable du premier dispositif (116 ; 216 ; 316 ; 416 ; 516) de correction du signal de réception en fonction d'une analyse du signal de réception ; et
- un dispositif (120 ; 220 ; 320 ; 420 ; 520) pour contrôler et analyser le signal de réception et pour activer le dispositif (118 ; 218 ; 318 ; 418 ; 518) de réglage de la correction réglable, le dispositif (120 ; 220 ; 320 ; 420 ; 520) pour contrôler et analyser le signal de réception étant conçu pour contrôler des propriétés statistiques du signal d'émission et en même temps pour déterminer les intervalles de temps pendant lesquels le signal de réception est approprié pour une adaptation par réglage de la correction.

2. Dispositif selon la revendication 1 qui comprend, de plus, un premier dispositif (223 ; 323 ; 423 ; 523) pour décider et pour délivrer un premier signal d'estimation, il estime les symboles émis du signal d'émission et fournit les symboles estimés dans un premier signal d'estimation.

3. Dispositif selon la revendication 2 qui comprend, de plus, un premier dispositif (225 ; 325 ; 425 ; 525) pour délivrer un premier signal d'erreur (ê), il détermine le premier signal d'erreur (ê) à partir de la différence entre le premier signal d'estimation, fourni par le premier dispositif (223 ; 323 ; 423 ; 523) de décision, et le premier signal de réception corrigé, fourni par le premier dispositif (216 ; 316 ; 416 ; 516) de correction.

4. Dispositif selon la revendication 3 dans lequel le dispositif (218) pour régler la correction réglable détermine la première correction réglable du premier dispositif de correction du signal de réception à partir du signal de réception et du premier signal d'erreur (ê).

5. Dispositif selon la revendication 4 dans lequel le dispositif (218) pour régler la correction réglable déduit la première correction réglable du premier dispositif de correction du signal de réception à partir de la corrélation du signal de réception et du premier signal d'erreur (ê).

6. Dispositif selon la revendication 3, 4 ou 5 dans lequel le dispositif (220) pour contrôler le signal de réception envoie (227) le premier signal d'erreur (ê) au dispositif (218) de réglage de la correction réglable et active le dispositif (218) de réglage de la correction réglable, lorsque le signal d'émission associé au signal de réception comporte les propriétés déterminées.

7. Dispositif selon une des revendications 1 à 3 qui comprend, de plus, un deuxième dispositif (328 ; 428 ; 528) pour corriger le signal de réception et pour délivrer un deuxième signal de réception corrigé, le deuxième dispositif (328 ; 428 ; 528) pour corriger le signal de réception comprenant une deuxième correction réglable.

8. Dispositif selon la revendication 7 qui comprend, de plus, un deuxième dispositif (330 ; 430 ; 530) pour décider et pour délivrer un deuxième signal d'estimation, il estime les symboles émis du signal d'émission et fournit les symboles estimés dans le deuxième signal d'estimation.

9. Dispositif selon la revendication 8 qui comprend, de plus, un deuxième dispositif (332 ;432 ;532) pour délivrer un deuxième signal d'erreur (ê'; ê"), il détermine le deuxième signal d'erreur à partir de la différence entre le deuxième signal d'estimation, fourni par le deuxième dispositif (223 ; 323 ; 423 ; 523) de décision, et le deuxième signal de réception corrigé, fourni par le deuxième dispositif (216 ; 316 ; 416 ; 516) de correction du signal de réception.

10. Dispositif selon la revendication 9 dans lequel le dispositif (318 ; 418 ; 518) pour régler la correction réglable détermine la deuxième correction réglable du deuxième dispositif (328 ; 428 ; 528) de correction du signal de réception à partir du signal de réception et du deuxième signal d'erreur (ê' ; ê'').

11. Dispositif selon la revendication 10 dans lequel le dispositif (318 ; 918 ; 518) pour régler la correction réglable déduit la deuxième correction réglable du deuxième dispositif (328 ; 428 ; 528) de correction du signal de réception à partir de la corrélation du signal de réception et du deuxième signal d'erreur (ê' ; ê").

12. Dispositif selon une des revendications 9 à 11 dans lequel le dispositif (320 ; 920 ; 520) pour contrôler le signal de réception envoie le deuxième signal d'erreur (ê'; ê") au dispositif (318 ; 918 ; 518) de réglage de la correction réglable et active le dispositif (318 ; 418 ; 518) de réglage de la correction réglable, lorsque le signal d'émission associé au signal de réception comprend les propriétés déterminées.

13. Dispositif selon une des revendications 9 à 12 qui comprend, de plus, un dispositif (334 ; 934 ; 534) pour comparer, il compare une première mesure de qualité, déduite du premier signal d'erreur (ê), et une deuxième mesure de qualité, déduite du deuxième signal d'erreur (ê' ; ê''), et lorsque la deuxième mesure de qualité est plus grande que la première mesure de qualité, la correction réglée du deuxième dispositif (328 ; 428 ; 528) de correction du signal de réception est délivrée par le dispositif (318 ; 418 ; 518) de réglage de la correction réglable au premier dispositif (316 ; 416 ; 516) de correction du signal de réception.

14. Dispositif selon la revendication 13, dans lequel un premier et un deuxième dispositif (336 , 338 ; 436, 438 ; 536, 538) pour déterminer une mesure de qualité sont disposés avant le dispositif de comparaison (334 ; 434 ; 534), il déduisent la première et la deuxième mesure de qualité à partir du premier signal d'erreur (ê) et du deuxième signal d'erreur (ê' ; ê") et les délivrent au dispositif (334 ; 434 ; 534) de comparaison.

15. Dispositif selon la revendication 13 ou 14 dans lequel la première et la deuxième mesure de qualité sont déduites du carré moyen des erreurs du premier signal d'erreur (ê) et du deuxième signal d'erreur (ê' ; ê'').

16. Dispositif selon une des revendications 2 à 15 dans lequel le dispositif pour contrôler (220 ; 320 ; 420 ; 520) le signal de réception contrôle de façon sélectionnable soit le premier signal de réception corrigé, fourni par le premier dispositif (216 ; 316 ; 416 ; 516) de correction du signal de réception, soit le premier signal d'estimation, fourni par le premier dispositif (223 ; 323 ; 423 ; 523) de décision.

17. Dispositif selon une des revendications 8 à 16 dans lequel le dispositif (420 ; 520) pour contrôler le signal de réception contrôle de façon sélectionnable soit le deuxième signal de réception corrigé, fourni par le deuxième dispositif (428 ; 528) de correction du signal de réception, soit le deuxième signal d'estimation, fourni par le deuxième dispositif (430 ; 530) de décision.

18. Dispositif selon une des revendications 9 à 17 qui comprend, de plus, un premier filtre de mise en forme (442) qui délivre un signal de réception mis en forme au deuxième dispositif (428) de correction du signal de réception et au dispositif (418) de réglage de la correction réglable, et un deuxième filtre de mise en forme (444) qui comprend une fonction de filtrage correspondante au premier filtre de mise en forme (442) et qui délivre un deuxième signal d'estimation mis en forme au dispositif (432) pour délivrer un deuxième signal d'erreur (ê").

19. Dispositif selon une des revendications 9 à 17 qui comprend, de plus, un premier filtre de mise en forme (546) qui délivre un signal de réception mis en forme au dispositif (518) de réglage de la correction réglable, et un deuxième filtre de mise en forme (548) qui comprend une fonction de filtrage identique à celle du premier filtre de mise en forme (546) et qui délivre un deuxième signal d'erreur (ê') mis en forme au dispositif (520) de contrôle du signal de réception.

20. Dispositif selon une quelconque des revendications précédentes dans lequel le premier et/ou le deuxième dispositif (116 ; 216 ; 316 ; 328 ; 416 ; 428 ; 516 ; 528) pour corriger le signal de réception comprennent un filtre programmable dont la correction est réglable par le dispositif (118 ; 218 ; 318 ; 418 ; 518) pour régler la correction réglable, via des coefficients de filtrage.

21. Dispositif selon la revendication 20 dans lequel le premier et/ou le deuxième dispositif (116) pour corriger le signal de réception comprennent de plus à chaque fois une première mémoire (124) pour mémoriser un premier jeu de coefficients de filtrage.

22. Dispositif selon la revendication 21 dans lequel le premier jeu de coefficients de filtrage comprend des coefficients de filtrage qui sont utilisés lors de l'initialisation d'une transmission de signaux d'émission.

23. Dispositif selon la revendication 20, 21, ou 22 dans lequel le premier et/ou le deuxième dispositif (116) pour corriger le signal de réception comprennent, de plus, une deuxième mémoire (126) pour mémoriser un deuxième jeu de coefficients de filtrage.

24. Dispositif selon la revendication 23 dans lequel le deuxième jeu de coefficients de filtrage comprend des coefficients de filtrage qui sont délivrés par le dispositif (118) pour régler la correction réglable.

25. Dispositif selon l'une quelconque des revendications précédentes dans lequel le dispositif (120 ; 220 ; 320 ; 420 ; 520) pour contrôler le signal de réception comprend un banc de filtrage pour déterminer la distribution de l'énergie dans le signal de réception.

26. Dispositif selon la revendication 25 dans lequel le banc de filtrage comprend des filtres passe-bande.

27. Dispositif selon l'une quelconque des revendications précédentes dans lequel le dispositif (120 ; 220 ; 320 ; 420 ; 520) pour contrôler le signal de réception réalise une transformation de Fourrier pour déterminer la distribution de l'énergie dans le signal de réception.

28. Dispositif selon l'une quelconque des revendications précédentes dans lequel des déviations du signal d'émission par rapport à un spectre de bande de base plat avec une caractéristique passe-bas sont prises en compte sous forme d'un spectre de référence correspondant dans le dispositif (120 ; 220 ; 320 ; 420 ; 520) de contrôle du signal de réception.

29. Système de transmission (100 ; 200 ; 300 ; 400 ; 500) avec des caractéristiques suivantes :
- un émetteur (104 ; 204 ; 304 ; 404 ; 504) pour émettre un signal d'émission ;
- un récepteur (106 ; 206 ; 306 ; 406 ; 506) pour recevoir un signal de réception ;
- un canal de transmission (102 ; 202 ; 302 ; 402 ; 502) qui est disposé entre l'émetteur (104 ; 204 ; 304 ; 404 ; 504) et le récepteur (106 ; 206 ; 306 ; 406 ; 506) ; et
- un dispositif, relié avec le récepteur (106 ; 206 ; 306 ; 406 ; 506), pour corriger un signal de réception selon une des revendications précédentes.

30. Procédé pour corriger un signal de réception qui est associé à un signal d'émission qui est émis dans un système de transmission déformant (100 ; 200 ; 300 ; 400 ; 500), le signal d'émission comprenant des intervalles de temps, déterminables par l'analyse du signal de réception, dans lesquels celui-ci comporte des propriétés déterminées qui sont appropriées au réglage d'une correction de la distorsion du signal de réception provoquée par le système de transmission (100 ; 200 ; 300 ; 400 ;500), avec les étapes suivantes :
- correction du signal de réception avec une correction réglable et livraison d'un signal de réception corrigé ;
- réglage de la correction réglable en fonction d'une analyse du signal de réception ; et
- contrôle du signal de réception et activation du réglage de la correction réglable, les propriétés statistiques du signal d'émission étant contrôlées et, en même temps, les intervalles de temps, pendant lesquels le signal de réception est approprié pour une adaptation par réglage de la correction, sont déterminés.
